# EUROPEAN PATENT SPECIFICATION

(11) **EP 3 708 462 B1**
(45) Date of publication and mention of the grant of the patent: **02.08.2023**
(21) Application number: 20160723.1
(22) Date of filing: 03.03.2020
(51) Int. Cl.: B62B 7/06, B62B 7/14

(54) **A CARRIAGE FRAME FOLDING DEVICE THAT CAN BE UNLOCKED ALONG WITH THE FOLDING OF THE SEAT**
EINE MIT DEM ZUSAMMENKLAPPEN DES SITZES ENTRIEGELBARE WAGENRAHMENFALTVORRICHTUNG
DISPOSITIF DE PLIAGE DE CADRE DE CHARIOT POUVANT ÊTRE DÉVERROUILLÉ LE LONG DU PLIAGE DU SIÈGE

(30) Priority: 11.03.2019 CN 201920304543 U
(43) Date of publication of application: 16.09.2020
(73) Proprietor: Yojin Industrial Corp., Chia i Hsien (TW)
(72) Inventor: LIN, Ping-Ching, TAI PAO HSIANG, CHIA I HSIEN (TW)
(74) Representative: Hellmich, Wolfgang

(56) References cited:
- EP-A2- 2 192 022
- GB-A- 2 532 219
- GB-A- 2 544 377

## Description

The present invention relates generally to a carriage frame that can be separated from the seat and folded independently, or combined with the seat and folded together with the seat, and more particularly to a structure which enables folding of the frame along with the folding of the seat, and in which, the seat back can be tilted and integrated into one body with the carriage frame, facilitating the operation of adjustment and folding. The present invention relates to a carriage frame according to the preamble parts of claim 1, which is known from EP 2 192 022 A2.

Previously, in a baby carriage, the seat part and the frame part are fixed together. In later designs, the seat part is separated from the carriage frame and can be attached to or detached from the frame as needed, and meanwhile, the seat can be attached to the frame facing forward or backward, so that the caregiver can take care of the baby more closely as needed.

Among the existing baby carriages with a detachable seat, some have a foldable seat and also a foldable carriage frame. However, before folding the carriage frame, the seat must be firstly detached from the frame. This not only causes inconvenient operation for the user, but also makes it inconvenient when putting away the seat and the frame. Or, when the carriage frame and the seat are combined and the user wants to fold both of them together, they will have to be folded separately. Such an operation will be too troublesome for the user.

Hence, some inventors proposed new designs for the combined carriage frame and seat to be folded together simultaneously. Examples are Patents No. CN104828119A, CN207106577U, etc. Although the final purpose of the various simultaneous folding methods disclosed in the above inventions are for the carriage frame and seat to be folded together simultaneously, they are operated differently due to different structural designs. In some designs, the structure is not stable enough during operation. While in some other designs, the structure is too complicated, resulting in difficulty in manufacturing and assembly. Moreover, in order for the seat back to be adjusted, an extra mechanism must be adopted. The adjustment of the seat back cannot be integrated with the folding of the carriage frame and seat. These problems will need to be solved.

EP 2 192 022 A2 discloses a foldable stroller and fold linkage for same, comprising a frame assembly and a seat assembly. In order to fold the frame assembly, a user must first remove the seat assembly from the frame assembly. To do so, a user pulls upward on the release button to disengage the seat assembly having a seat mount from the male seat connector of the frame assembly. Once unlatched or released, the seat mount can be lifted from the male seat connector on the shell cover. The release button is received in a slot under the upper connector. The seat mount has an outer side with an inverted, U-shaped, female coupling that surrounds on three sides a generally flat face of the mount. The coupling is open at the bottom of the seat mount. A chamfer or ramp is disposed at an open bottom edge of the flat face. The free end of the latch finger clears the housing body and the surface within the slot allowing the fold joint to pivot or fold. To fold the frame assembly, the user pushes the handle assembly downward toward the rear legs. The frame assembly has a front leg assembly that is constructed to form a pair of laterally spaced apart front legs. The fold joint is connected to the rear leg and to the push bar.

In order to overcome the inconvenience of operation due to lack of integration in simultaneous folding of the conventional carriage frame and seat, the present invention provides a folding joint that links the handhold, the front leg and the rear leg, and further enables simultaneous turning of the handhold and the front leg through a turnover linkage plate. Through the unlocking button configured on the folding joint, as well as the unlocking linkage component, the handhold clasping block, and the fixing pin, when the unlocking button is pressed, or when the seat is folded to push the unlocking linkage component, the unlocking button will slide downward to release the handhold clasping piece from the fixing pin, so that the handhold and the front leg can move toward the rear leg and be folded together.

The technical solution used by the present invention to overcome the above problem is as follows: adopting the configuration of a folding joint, and between the upper end of folding joint and a handhold, as well as between the front end of the folding joint and a front leg, pivot rotation parts are respectively configured to link them together, and a rear leg is fixed on the rear end of the folding joint. Moreover, on the folding joint, a seat connector is provided; on the periphery of the pivot rotation part of the handhold, a clasping portion is provided; between the front leg and the two pivot rotation parts of the handhold, a turnover linkage plate is configured through pivot connection; the seat connector of the folding joint houses an unlocking button, which can slide in the radial direction under the push by an upward elastic force, and whose upper end is exposed outside the folding joint. The lower end of the unlocking button clasps an unlocking linkage component that can move simultaneously in the same direction. At the position of the folding joint corresponding to the upper end of the unlocking button, the folding joint houses a handhold clasping piece that can also move simultaneously in the same direction, and the upper end of the handhold clasping piece can be clasped onto the clasping portion of the handhold; thus, when the unlocking button or the unlocking linkage component is forced to slide downward, the handhold clasping piece will be released from the clasping portion of the handhold, so that the handhold and the front leg can move together toward the rear leg and be folded together.

In the above solution, between the folding joint and the front leg, a torsion spring is provided. The torsion spring is tightened, with its one end clasped on the pivot rotation part of the front leg, and the other end clasped on the folding joint, so that there is an elastic force that pulls the front leg toward the rear leg.

In the above solution, in the center of the turnover linkage plate, a clasping hole is configured, and a fixing pin is configured axially inside the unlocking button. The terminal end of the fixing pin can be clasped into the clasping hole of the turnover linkage plate. At the sheathing position between the fixing pin and the unlocking button, there are slant pressing surfaces corresponding to each other and being pressed against each other, so that, when the unlocking button is forced to slide downward, the fixing pin will be released from the clasping hole.

The beneficial efficacy of the present invention is that, through configurations of the unlocking button or unlocking linkage component on said seat connector, when pressed to slide downward, the upper end of the handhold clasping piece will be released from the clasping portion of the handhold, and the fixing pin will be released from the clasping hole of the turnover linkage plate, so that the handhold and the front leg can move simultaneously toward the rear leg and be folded together. Thus, the carriage frame can be folded independently, or be folded simultaneously along with the folding of the seat.

Below are further detailed descriptions of the present invention with reference to the accompanying figures and with preferred embodiments as examples;
Fig.1 is a perspective view of the carriage frame of the present invention;
Fig.2 is a partially enlarged view of the frame folding joint of the present invention;
Fig.3 is a partially exploded view of the folding joint of the present invention;
Fig.4 is a partially exploded view of the folding joint of the present invention in another direction;
Fig.5 is a detailed exploded view of the folding joint of the present invention;
Fig.6 is a detailed exploded view of the folding joint of the present invention in another direction;
Fig.7 is a schematic view of the folding joint of the present invention wherein the handhold and the front leg are clasped;
Fig.8 is a schematic view of the folding joint of the present invention wherein the handhold and the front leg are unlocked;
Fig.9 is a schematic view of the carriage frame of the present invention in the state of being unfolded;
Fig.10 is a schematic view of the carriage frame of the present invention in the state of being folded;
Fig.11 is a schematic view of the present invention showing the connection between the frame and the seat;
Fig.12 is a partial front view of the present invention before combination of the carriage frame and the seat;
Fig.13 is a partial front view of the present invention after combination of the carriage frame and the seat;
Fig.14 is an operational view of the present invention when the seat unlocks the carriage frame;
Fig.15 is a schematic view of the present invention when the unlocking linkage component on the seat connector is pushed;
Fig.16 is a schematic view of the present invention with the carriage frame and the seat folded together.

To achieve the object, technical scheme and advantages of the present invention more readily understood, further detailed descriptions are provided below based on preferred embodiments and with reference to accompanying figures.

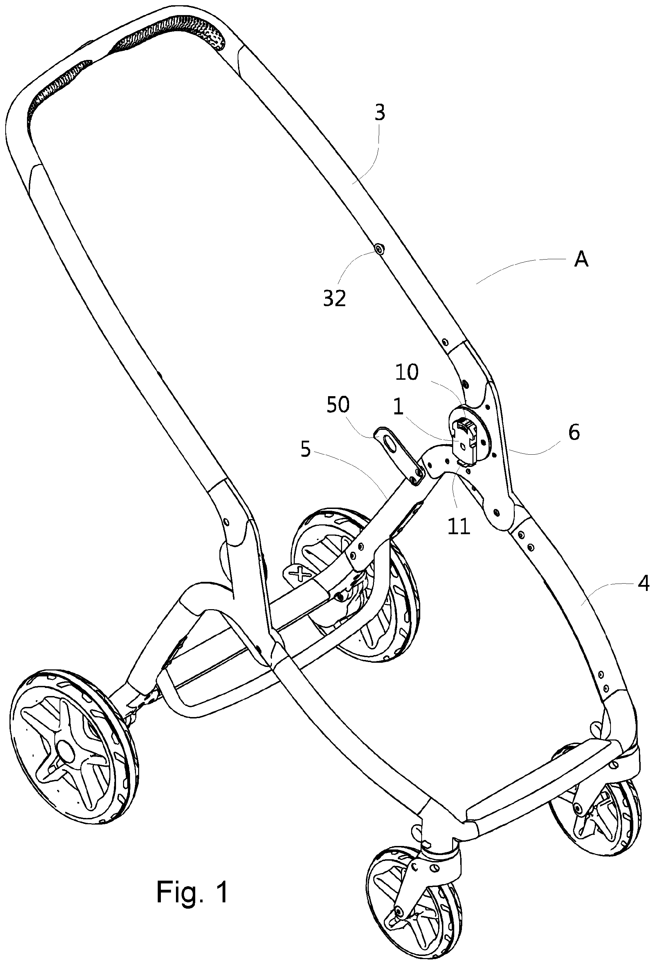

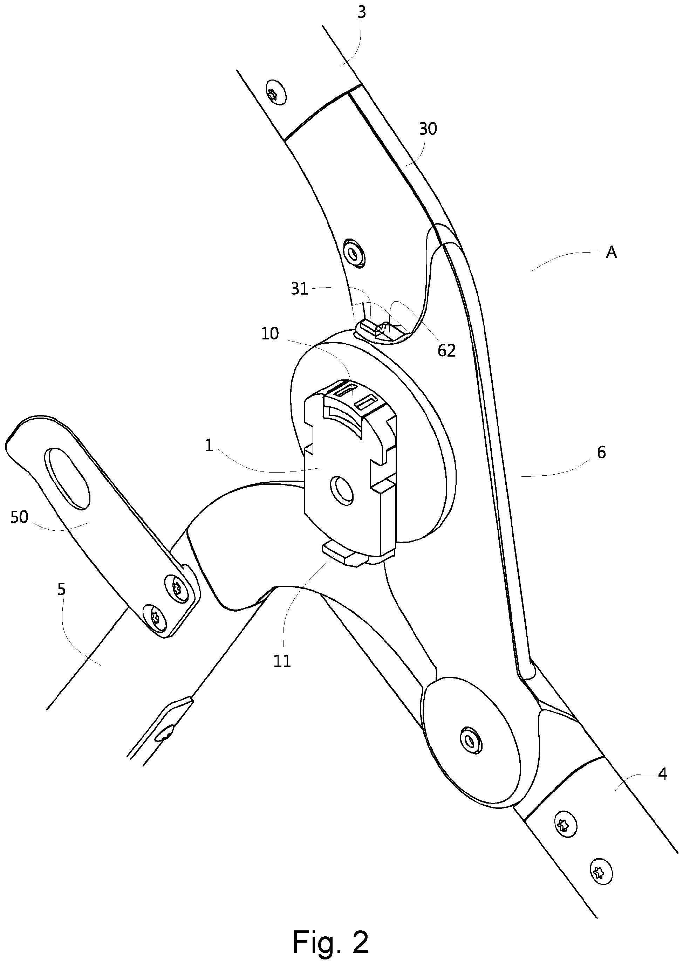

Referring to Figs.1 and 2, the frame A of the baby carriage of the present invention mainly comprises a handhold 3, a front leg 4 and a rear leg 5, all fixed on a folding joint 6 through pivotal connection. The handhold 3 is pivotally connected on the upper end of the folding joint 6, the front leg 4 is pivotally connected on the front end of the folding joint 6, and the rear leg 5 is connected on the rear end of the folding joint 6. Moreover, the folding joint 6 is fixed with a seat connector 1 for attachment and detachment of the seat. Inside the seat connector 1, an unlocking button 10 is configured, whose upper end is exposed upward and is capable of elastic recovery and sliding radially. Inside the seat connector 1, an unlocking linkage component 11 is configured, whose lower end is exposed downward and which will move simultaneously with the unlocking button 10. In addition, at the pivotal joint between the folding joint 6 and the handhold 3, the outer periphery of the handhold 3 is configured with a clasping portion 31, at the corresponding position, the folding joint 6 is configured with a handhold clasping piece 62, which will move simultaneously with the unlocking button 10 and will be clasped into the above clasping portion 31; furthermore, a convex portion 32 is configured on the inner surface of one side of the handhold 3, and at the corresponding position, the rear leg 5 is configured with a clasping plate 50.

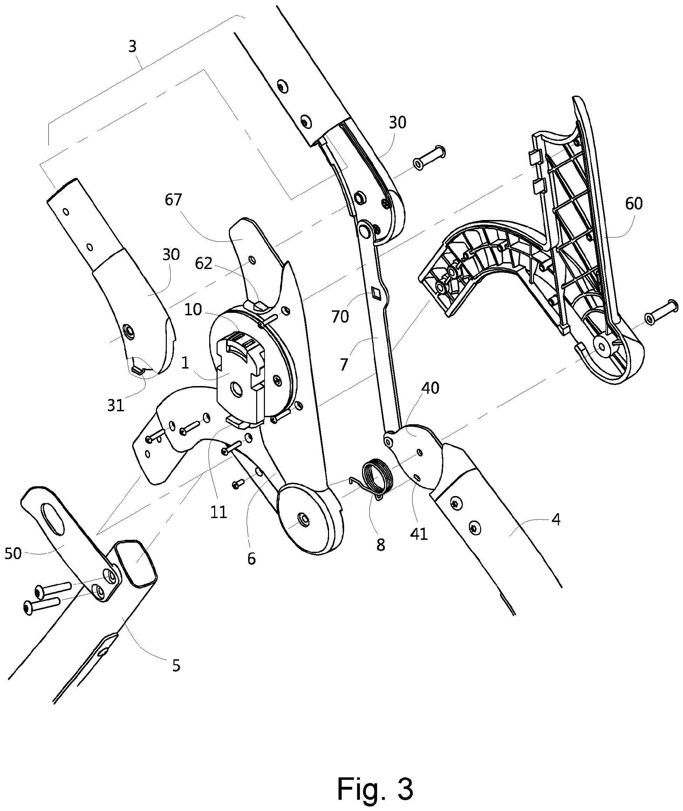

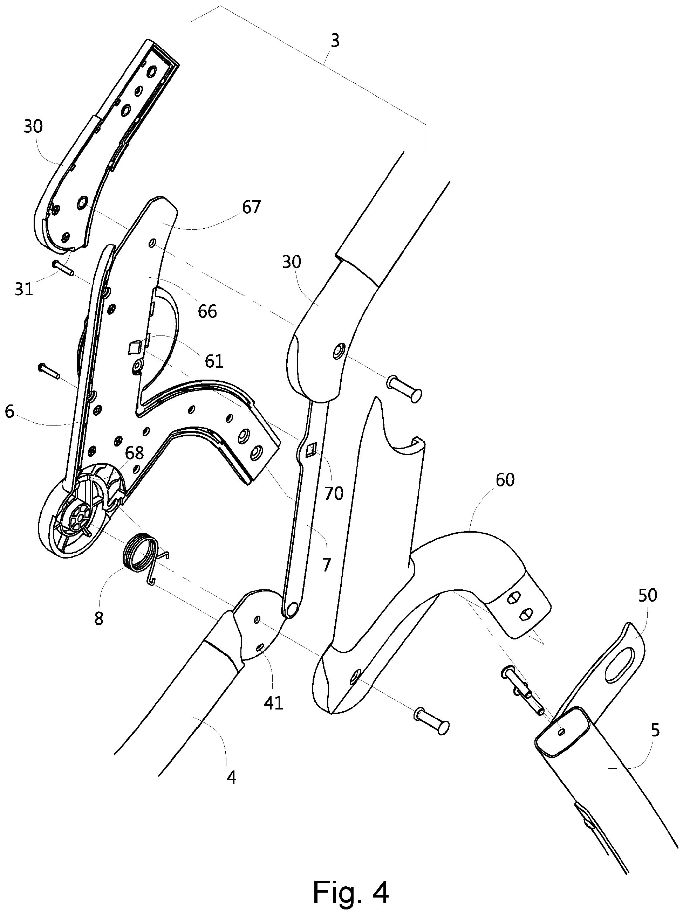

Referring to Figs.3 and 4, the upper end of the folding joint 6 is configured with a pivot rotation part 67, and the lower end of the handhold 3 is configured with a pivot rotation part 30, and the two are fixed together through pivotal connection. The upper end of said front leg 4 is configured with a pivot rotation part 40, having a clasping hole 41 configured at a position adjacent to the outer periphery. In addition, between the pivot rotation part 30 of the handhold and the pivot rotation part 40 of the front leg 4, a turnover linkage plate 7 is connected pivotally, having a clasping hole 70. The folding joint 6 further houses a fixing pin 61, which is driven by the unlocking button 10 and slides in the axial direction and is capable of elastic recovery. The terminal end of the fixing pin 61 can go through and be clasped into the clasping hole 70 configured on the turnover linkage plate 7; moreover, between the front end of the folding joint 6 and the pivot rotation part 40 of the front leg 4, a torsion spring 8 is provided. The tightened end of the torsion spring 8 is clasped into the clasping hole 41 of the pivot rotation part 40, the other end is clasped into the clasping slot 68 configured on the folding joint 6 at the corresponding position. Through the recovery force between the two ends of the torsion spring 8, there is an elastic force between the front leg 4 and the rear leg 5 to pull them together; in addition, a shell cap 60 is configured and locked on the folding joint 6, so that the turnover linkage plate 7 is enclosed inside the folding joint 6.

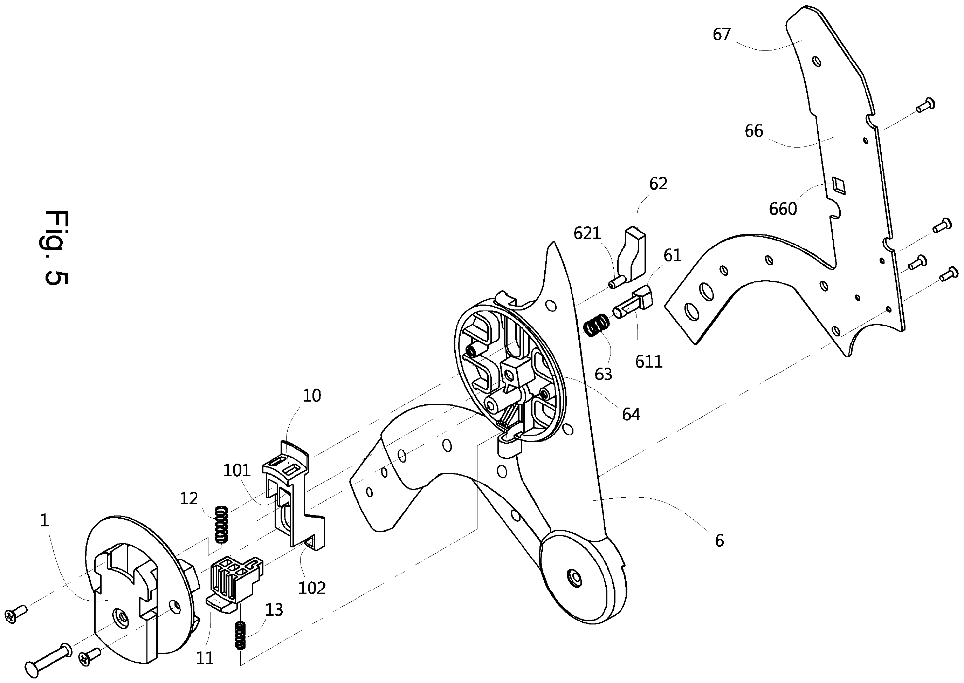

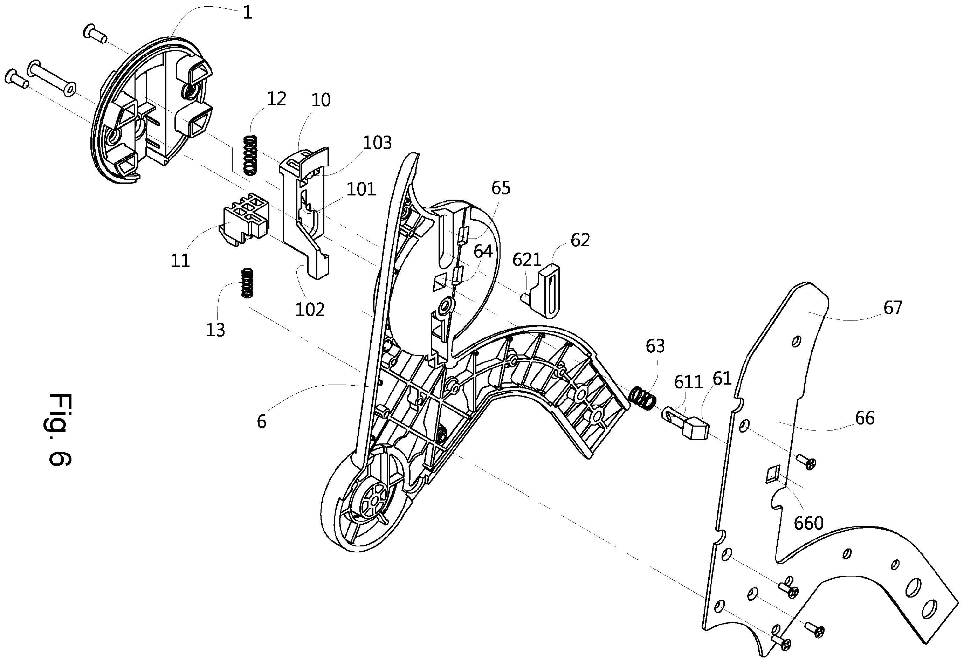

Further, referring to Figs. 5 and 6, which show the relations among the unlocking button 10, the unlocking linkage component 11, the fixing pin 61 and the handhold clasping piece 62 housed inside the seat connector 1 and folding joint 6. Inside the seat connector 1, a spring 12 is provided. The spring 12 elastically pushes the unlocking button 10 upward, so that the upper end of the unlocking button 10 is exposed above the seat connector 1. At the corresponding position, the folding joint 6 of the unlocking linkage component 11 is configured with another spring 13. The spring 13 pushes the unlocking linkage component 11 upward, so that the rear end of the unlocking linkage component 11 is clasped into the lower end clasping slot 102 of the unlocking button 10, and so that the unlocking button 10 will move simultaneously with the unlocking linkage component 11. Meanwhile, the unlocking linkage component 11 can be exposed from the opening below the seat connector 1 and can be triggered.

Moreover, the upper end of the folding joint 6 is configured with a guide groove 65, the handhold clasping piece 62 is housed inside and can slide along in the radial direction. The lower end of the handhold clasping piece 62 is configured with an axle portion 621 in the axial direction. The axle portion 621 is inserted into the axle hole 103 configured at the corresponding position of the unlocking button 10, so that the handhold clasping piece 62 can move simultaneously with the unlocking button 10; in addition, the folding joint 6 is further configured with a recess hole 64 in the axial direction, wherein a spring 63 is held. Said fixing pin 61 is held inside the recess hole 64 and is pushed outward by the spring 63 and slide outward along the recess hole 64. At the center of the unlocking button 10, a slant pressing surface 101 is configured, and at the corresponding terminal end of the fixing pin 61, a matching slant pressing surface 611 is configured, so that both of the slant pressing surfaces 101, 611 are pressed on each other and slide together, and the fixing pin 61 is clasped by the unlocking button 10, so that the fixing pin 61 and the unlocking button 10 will have linked movement. When the unlocking button 10 slides upward or downward, along with the change of the upper and lower positions of its slant pressing surface 101, the fixing pin 61 will move along the axial direction and extend to the outside of the fixing plate 66 (as shown in Fig.4) or withdraw into the inner side of the fixing plate 66; a fixing plate 66 is provided on the folding joint 6, which covers the fixing pin 61 and the handhold clasping piece 62 inside the folding joint 6. Moreover, a hole 660 is configured on the fixing plate 66, and the terminal end of the fixing pin 61 is extended out of the fixing plate 66, as shown in Fig.4. The upper end of the fixing plate 66 forms the pivot rotation part 67 on the upper end of the folding joint 6 that is pivotally connected to the handhold 3.

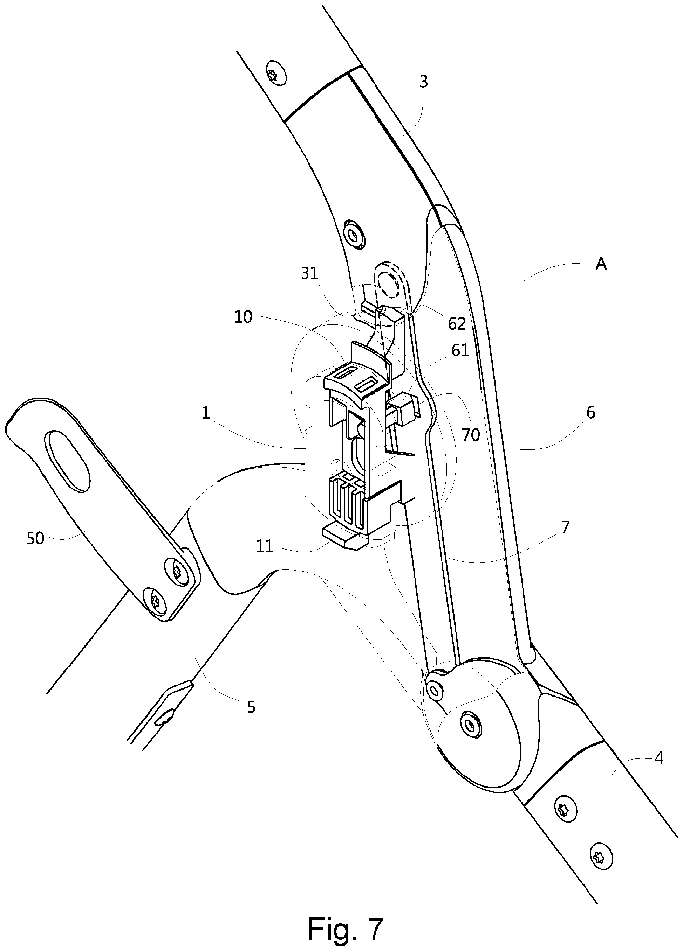

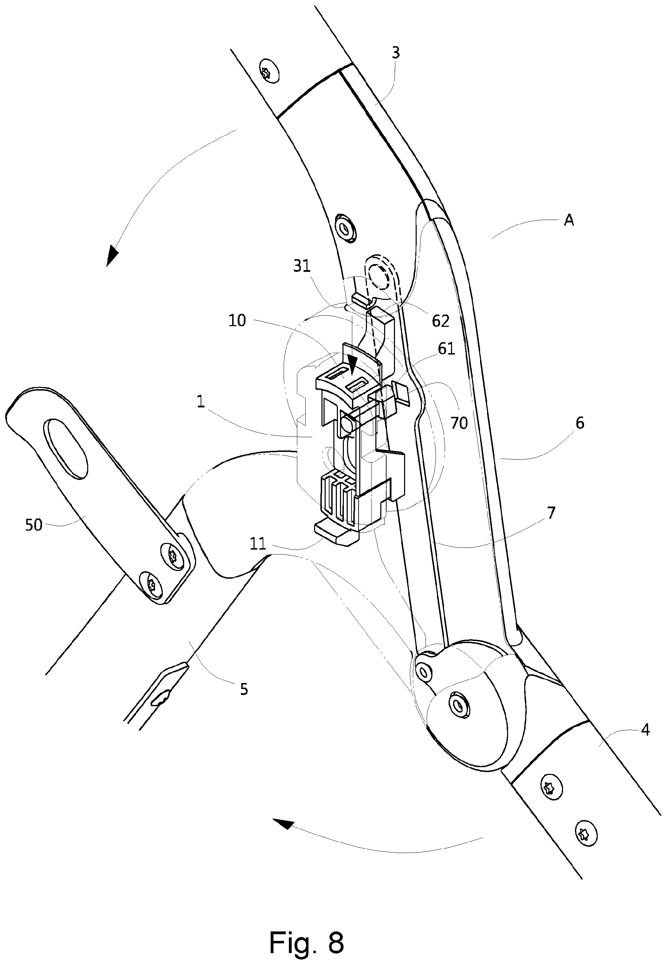

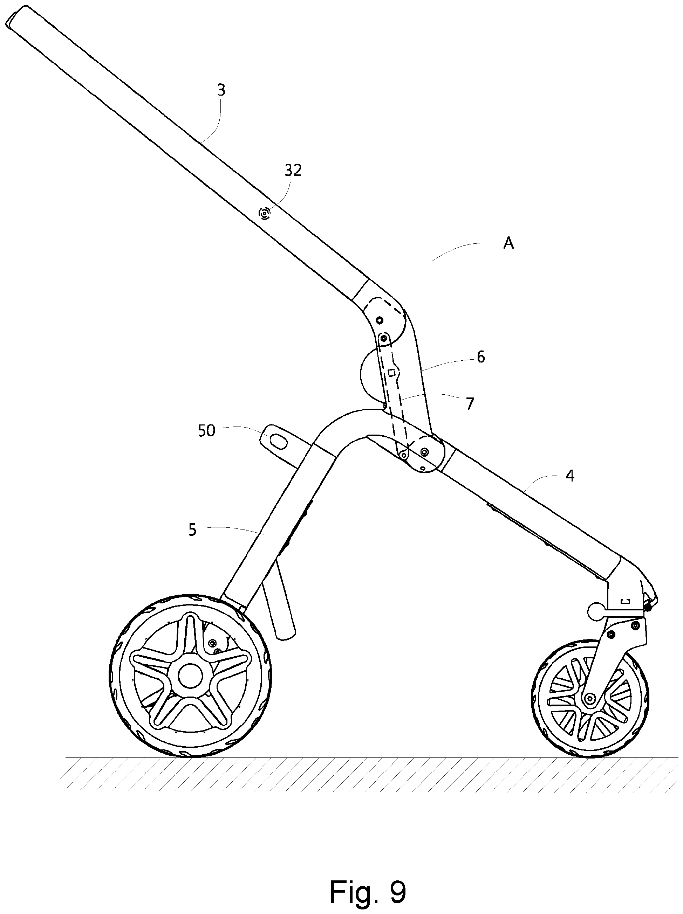

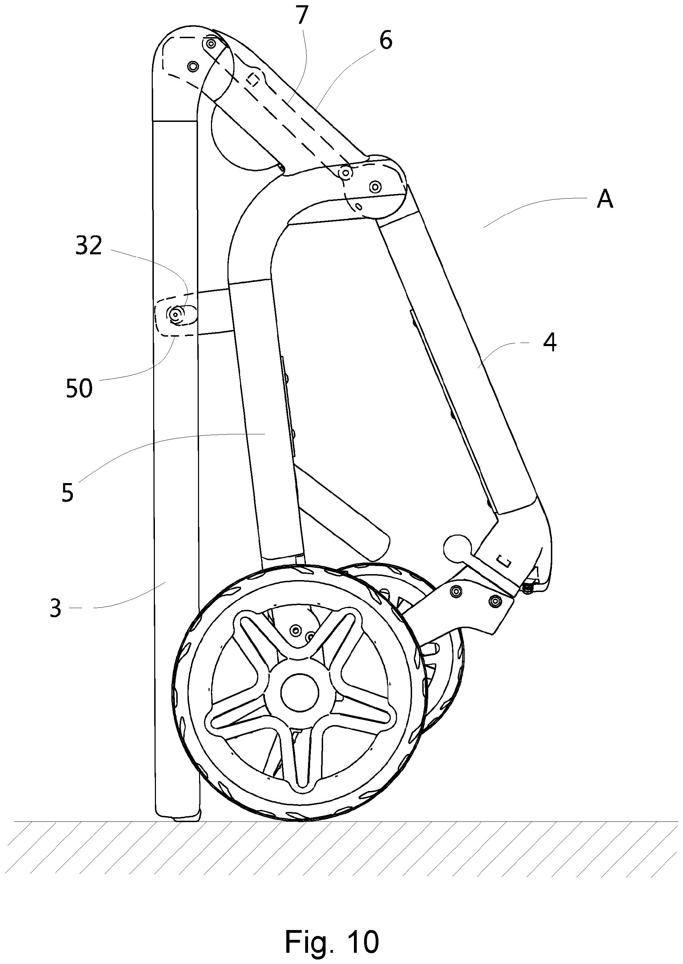

Thus, as shown in Fig.7, when the unlocking button 10 is not pressed down, the terminal end of the fixing pin 61 is just extended into the clasping hole 70 of the turnover linkage plate 7. The upper end of the handhold clasping piece 62 is just pressed against the clasping portion 31 of the handhold 3, so that the unfolded handhold 3 and the front leg 4 are blocked and restricted, i.e., the carriage frame A is unfolded in the usage state as shown in Fig.9; on the contrary, as shown in Fig.8, when the unlocking button 10 is pressed down and slides downward, the terminal end of the fixing pin 61 will be released from the clasping hole 70 of the turnover linkage plate 7. The handhold clasping piece 62 will also be pulled downward and its upper end will also be released from the clasping portion 31. The handhold 3 and the front leg 4 can move simultaneously toward and join with the rear leg 5. In other words, the frame A can be folded in a state as shown in Fig.10. The convex portion 32 of the handhold 3 is clasped by the clasping plate 50 of the rear leg 5, so that the handhold 3, the front leg 4 and the rear leg 5 are fixed together and will not extend further outward.

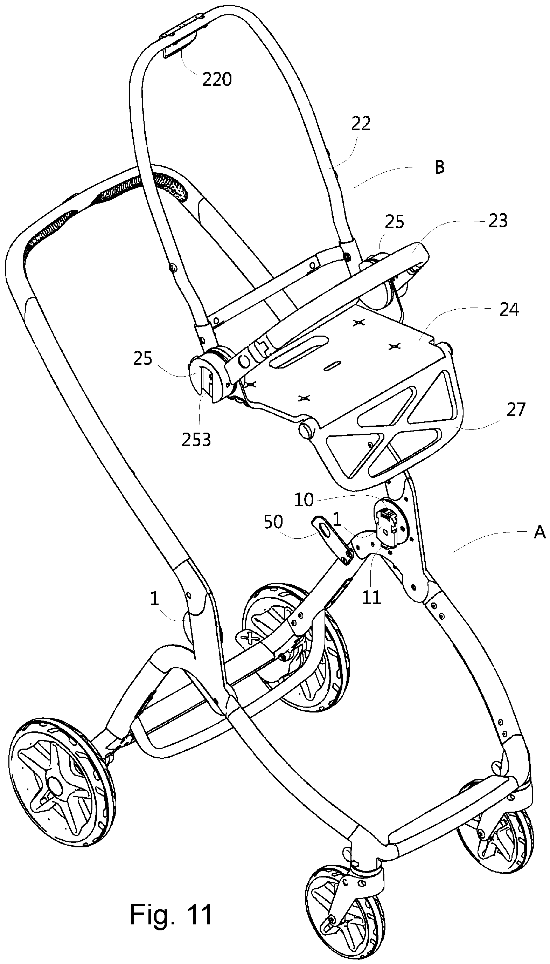

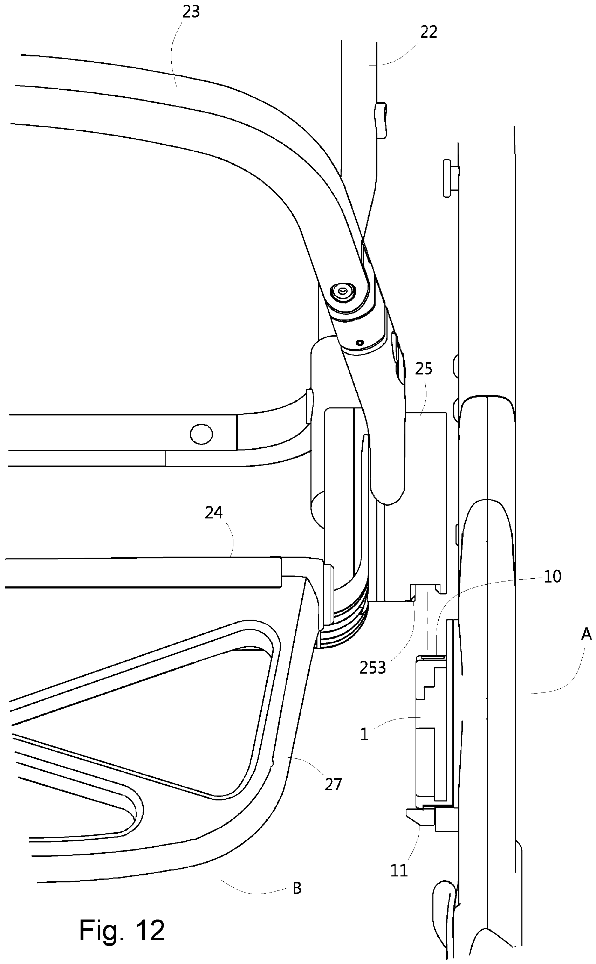

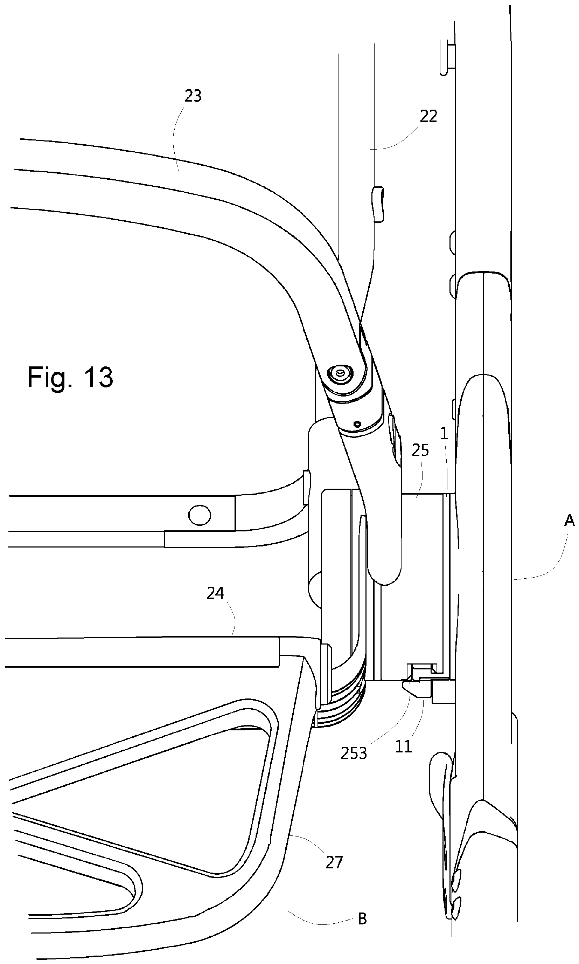

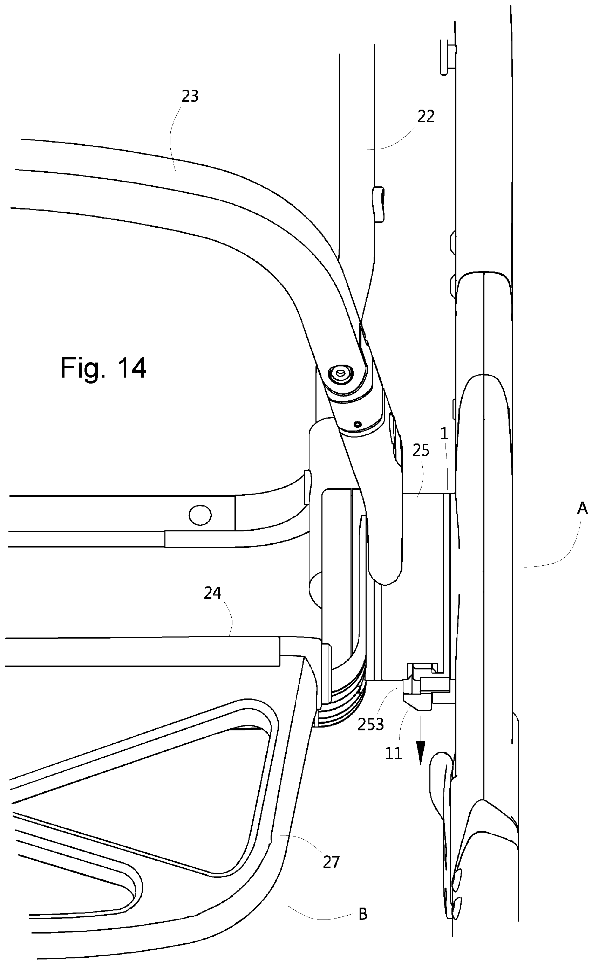

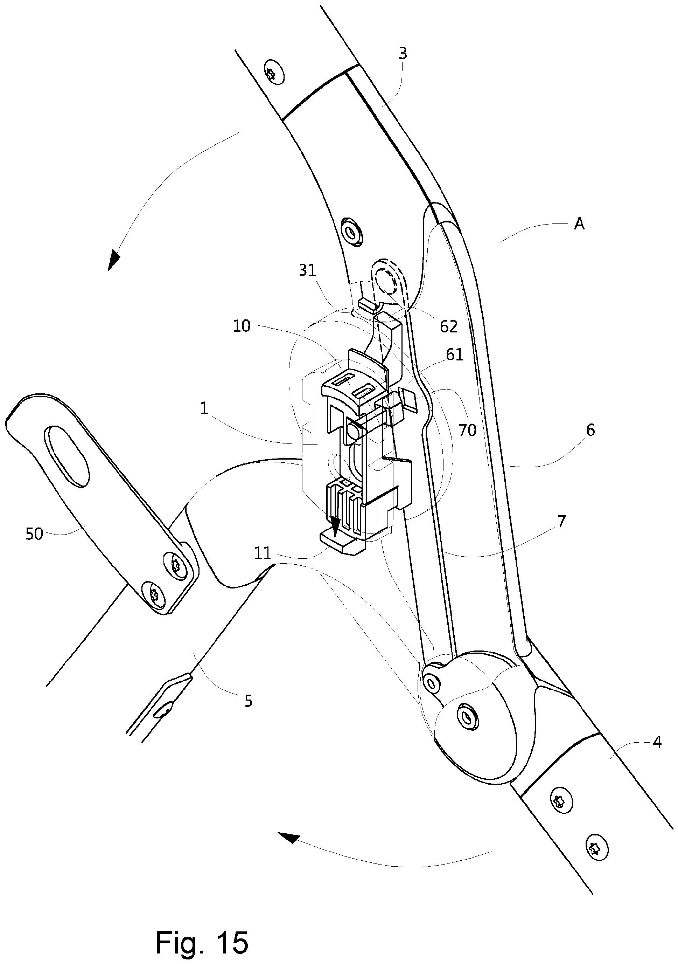

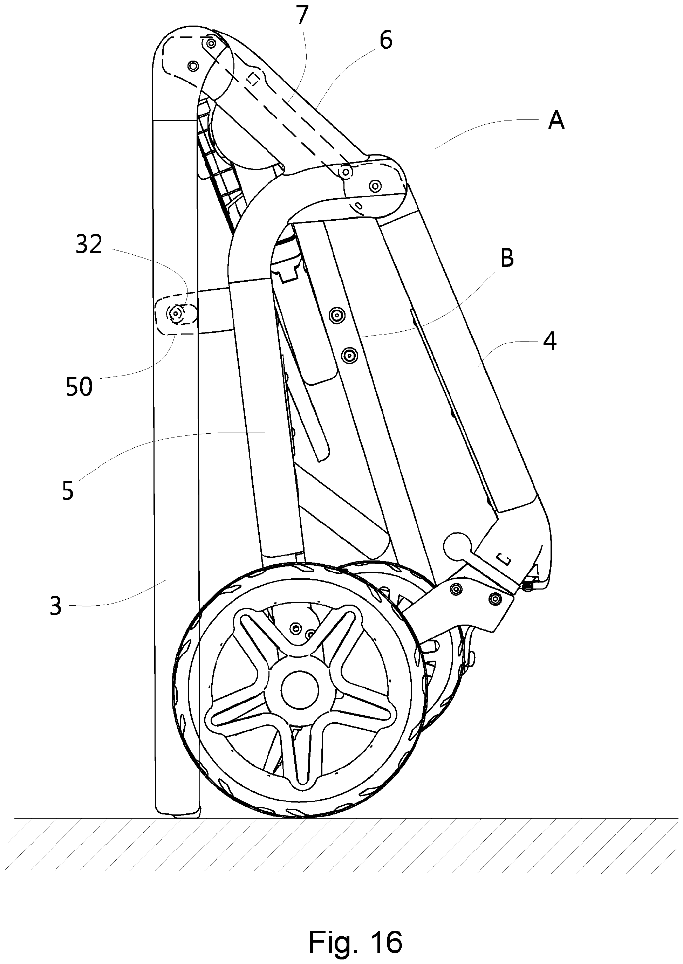

Moreover, as shown in Figs.11 and 12, the seat connector 1 on frame A of the baby carriage can be attached to or detached from the frame connector 25 configured on seat B. On the frame connector 25, an unlocking component 253 is configured. Seat B comprises a seat back frame 22, a handhold frame 23 and a seat base 24, which are all fixed on the frame connector 25 through pivotal connection, so that the seat back frame 22, the handhold frame 23 and the seat base 24 can be turned and folded. Thus, as shown in Fig. 13, when seat B is assembled on the seat connector 1 of frame A through the frame connector 25, and when seat B is folded, as shown in Figs.14 and 15, it will drive the unlocking component 253 to extend out, pushing the unlocking linkage component 11 on the seat connector 1 to slide downward. The unlocking button 10 together with the handhold clasping piece 62 will slide downward, causing the fixing pin 61 to withdraw from the clasping hole 70 of the turnover linkage plate 7. Thus, as shown in Fig.16, frame A and seat B can move simultaneously and be folded together. The folding operation of the baby carriage becomes simpler.

## Claims

1. A carriage frame (A) that can be unlocked along with the folding of a seat, the carriage frame (A) having a folding joint (6), with pivot rotation parts (30, 40) configured respectively between the upper end of the folding joint (6) and a handhold (3), as well as between the front end of the folding joint (6) and a front leg (4), so that the pivot rotation parts (30, 40) are fixed together through pivotal connection, and with a rear leg (5) fixed on the rear end of the folding joint (6), and further with a seat connector (1) configured on the folding joint (6), wherein:
a clasping portion (31) is configured on the outer periphery of the pivot rotation part (30) of the handhold (3);
a turnover linkage plate (7) is pivotally connected between the pivot rotation part (40) of the front leg (4) and the pivot rotation part (30) of the handhold (3);
the seat connector (1) on the folding joint (6) houses an unlocking button (10),
**characterized in that**
the unlocking button (10) is pushed by an upward elastic force to slide in the radial direction; the lower end of the unlocking button (10) clasps with an unlocking linkage component (11), which is adapted to move simultaneously in the same direction; at the corresponding position on the upper end of the unlocking button (10), the folding joint (6) houses a handhold clasping piece (62), which is also adapted to move simultaneously in the same direction; the upper end of the handhold clasping piece (62) can be clasped on the clasping portion (31) of the handhold (3);
when the unlocking button (10) or the unlocking linkage component (11) is pressed to slide downward, the handhold clasping piece (62) will be released from the clasping portion (31) of the handhold (3), so that the handhold (3) and the front leg (4) can turn simultaneously toward the rear leg (5) and be folded.

2. The carriage frame (A) defined in Claim 1, wherein a torsion spring (8) is configured between the front end of the folding joint (6) and the front leg (4), and the torsion spring (8) is tightened, with its one end clasped on the pivot rotation part (40) of the front leg (4), and its other end is clasped on the folding joint (6), so that there is an elastic force to draw the front leg (4) and the rear leg (5) together.

3. The carriage frame (A) defined in Claims 1 or 2, wherein the center of the turnover linkage plate (7) is configured with a clasping hole (70), and the center of the unlocking button (10) is axially sheathed with a fixing pin (61); the terminal end of the fixing pin (61) can be clasped into the clasping hole (70) of the turnover linkage plate (7); at the sheathing position between the fixing pin (61) and the unlocking button (10), there are slant pressing surfaces corresponding to each other and being pressed against each other, so that, when the unlocking button (10) is forced to slide downward, the fixing pin (61) will be released from the clasping hole (70).

## Patentansprüche

1. Ein Wagenrahmen (A), der mit dem Zusammenklappen des Sitzes entriegelt werden kann, wobei der Wagenrahmen (A) ein Zusammenklappgelenk (6) aufweist, wobei zwischen dem oberen Ende des Zusammenklappgelenks (6) und einem Haltegriff (3) sowie zwischen dem vorderen Ende des Zusammenklappgelenks (6) und einem Vorderbein (4) jeweils Schwenkdrehteile (30, 40) angeordnet sind, so dass die Schwenkdrehteile (30, 40) durch eine Schwenkverbindung aneinander und mit einem Hinterbein (5), das an dem hinteren Ende des Zusammenklappgelenks (6) befestigt ist, und ferner mit einem Sitzverbinder (1), der auf dem Zusammenklappgelenk (6) angeordnet ist, befestigt sind, wobei
ein Klammerabschnitt (31) außen am Schwenkdrehteil (30) des Haltegriffs (3) angebracht ist; wobei
eine Wendeverbindungsplatte (7) zwischen dem Schwenkdrehteil (40) des Vorderbeins (4) und dem Schwenkdrehteil (30) des Haltegriffs (3) schwenkbar verbunden ist;
wobei der Sitzverbinder (1) am Zusammenklappgelenk (6) einen Entriegelungsknopf (10) aufnimmt,
**dadurch gekennzeichnet, dass**
der Entriegelungsknopf (10) durch eine nach oben gerichtete elastische Kraft gedrückt wird, um in radialer Richtung zu gleiten; wobei das untere Ende des Entriegelungsknopfes (10) eine Entriegelungsverbindungskomponente (11) umklammert, die angepasst ist, um sich gleichzeitig in dieselbe Richtung zu bewegen; wobei das Zusammenklappgelenk (6) an der entsprechenden Stelle am oberen Ende des Entriegelungsknopfes (10) ein Haltegriffklammerstück (62) aufnimmt, das ebenfalls angepasst ist, um sich gleichzeitig in dieselbe Richtung zu bewegen; wobei das obere Ende des Haltegriffklammerstücks (62) an dem Klammerabschnitt (31) des Haltegriffs (3) festklammerbar ist;
wobei, wenn der Entriegelungsknopf (10) oder die Entriegelungsverbindungskomponente (11) gedrückt wird, um nach unten zu gleiten, das Haltegriffklammerstück (62) vom Halteabschnitt (31) des Haltegriffs (3) entriegelt wird, so dass der Haltegriff (3) und das Vorderbein (4) sich gleichzeitig zum Hinterbein (5) drehen können und zusammengeklappt werden.

2. Der Wagenrahmen (A) gemäß Anspruch 1, wobei eine Torsionsfeder (8) zwischen dem vorderen Ende des Zusammenklappgelenks (6) und dem Vorderbein (4) vorgesehen ist und die Torsionsfeder (8) gespannt ist, wobei sie mit einem Ende an dem Schwenkdrehteil (40) des Vorderbeins (4) festgeklemmt ist und mit dem anderen Ende auf dem Zusammenklappgelenk (6) festgeklemmt ist, so dass eine elastische Kraft das Vorderbein (4) und das Hinterbein (5) zusammenzieht.

3. Der Wagenrahmen (A) gemäß einem der Ansprüche 1 oder 2, wobei das Zentrum der Wendeverbindungsplatte (7) ein Rastloch (70) aufweist, und wobei das Zentrum des Entriegelungsknopfs (10) mit einem Fixierstift (61) axial ummantelt ist; wobei das abschließende Ende des Fixierstiftes (61) in das Rastloch (70) der Wendeverbindungsplatte (7) einrastbar ist; wobei es an der Ummantelungsposition zwischen dem Fixierstift (61) und dem Entriegelungsknopf (10) schräge Druckflächen gibt, die einander entsprechen und gegeneinander gedrückt werden, so dass, wenn der Entriegelungsknopf (10) gezwungen wird nach unten zu gleiten, der Fixierstift (61) aus dem Rastloch (70) gelöst wird.

## Revendications

1. Cadre de chariot (A) qui peut être déverrouillé le long du pliage d'un siège, le cadre de chariot (A) ayant une articulation de pliage (6), avec des parties à rotation pivotante (30, 40) respectivement configurées entre l'extrémité supérieure de l'articulation de pliage (6) et une poignée (3), aussi bien que entre l'extrémité frontale de l'articulation de pliage (6) et une jambe avant (4), de façon à être les parties à rotation pivotante (30, 40) ont fixés ensemble par connexion pivotante, et avec une jambe arrière (5) fixée sur l'extrémité arrière de l'articulation de pliage (6) et en outre avec un connecteur de siège (1) configuré sur l'articulation de pliage (6), dans lequel :
une partie d'accrochage (31) est configurée sur la périphérie extérieure de la partie à rotation pivotante (30) de la poignée (3) ;
une plaque d'attelage de retournement (7) est reliée de façon pivotante entre la partie à rotation pivotante (40) de la jambe avant (4) et la partie à rotation pivotante (30) de la poignée (3) ;
le connecteur de siège (1) situé sur l'articulation de pliage (6) abrite un bouton de déverrouillage (10) ;
**caractérisé en ce que** :
le bouton de déverrouillage (10) est poussé par une force élastique s'exerçant vers le haut pour coulisser dans la direction radiale ; l'extrémité inférieure du bouton de déverrouillage (10) s'accroche avec un élément d'attelage de déverrouillage (11) qui est conçu pour se mouvoir simultanément dans la même direction ; au niveau de la position correspondante sur l'extrémité supérieure du bouton de déverrouillage (10), l'articulation de pliage (6) abrite une pièce d'accrochage de poignée (62) qui est également conçue pour se mouvoir simultanément dans la même direction ; l'extrémité supérieure de la pièce d'accrochage de poignée (62) peut être accrochée sur la partie d'accrochage (31) de la poignée (3) ;
lorsque le bouton de déverrouillage (10) ou l'élément d'attelage de déverrouillage (11) est comprimé pour coulisser vers le bas, la pièce d'accrochage de poignée (62) est libérée depuis la partie d'accrochage (31) de la poignée (3), de sorte que la poignée (3) et la jambe avant (4) puissent tourner simultanément en direction de la jambe arrière (5) et soient pliées.

2. Cadre de chariot (A) selon la revendication 1, dans lequel un ressort à torsion (8) est configuré entre l'extrémité frontale de l'articulation de pliage (6) et la jambe avant (4) et dans lequel le ressort à torsion (8) est serré, avec son extrémité accrochée sur la partie à rotation pivotante (40) de la jambe avant (4) et son autre extrémité accrochée sur l'articulation de pliage (6), de sorte qu'il y ait une force élastique permettant de tirer la jambe avant (4) et la jambe arrière (5) ensemble.

3. Cadre de chariot (A) défini selon les revendications 1 ou 2, dans lequel le centre de la plaque d'attelage de retournement (7) est configuré avec un trou d'accrochage (70) et dans lequel le centre du bouton de déverrouillage (10) est gainé axialement avec une broche de fixation (61) ; l'extrémité terminale de la broche de fixation (61) peut être accrochée dans le trou d'accrochage (70) de la plaque d'attelage de retournement (7) ; au niveau de la position de gainage entre la broche de fixation (61) et le bouton de déverrouillage (10), on trouve des surfaces inclinées de compression correspondant entre elles et comprimées les unes contre les autres, de sorte que lorsque le bouton de déverrouillage (10) est forcé de coulisser vers le bas, la broche de fixation (61) soit libérée hors du trou d'accrochage (70).
